(19) Europäisches Patentamt / European Patent Office / Office européen des brevets

(11) **EP 3 867 870 B1**

(12) **EUROPÄISCHE PATENTSCHRIFT**

(45) Veröffentlichungstag und Bekanntmachung des Hinweises auf die Patenterteilung:
**27.12.2023 Patentblatt 2023/52**

(21) Anmeldenummer: **19812708.6**

(22) Anmeldetag: **18.11.2019**

(51) Internationale Patentklassifikation (IPC):
*G06T 7/00* (2017.01)

(52) Gemeinsame Patentklassifikation (CPC):
**G06T 7/0002; G01M 11/0278; G01M 11/0285; G01N 21/15; G01N 21/94; G03B 43/00; H04N 25/61;** G01N 2021/157; G06T 2207/20021; G06T 2207/20052; G06T 2207/30168

(86) Internationale Anmeldenummer:
**PCT/EP2019/081585**

(87) Internationale Veröffentlichungsnummer:
**WO 2020/126250 (25.06.2020 Gazette 2020/26)**

(54) **ERMITTELN EINER DURCHLASSGÜTE EINER OPTIKEINHEIT EINES KAMERASYSTEMS**

DETERMINING THE TRANSMISSION QUALITY OF AN OPTICAL UNIT IN A CAMERA SYSTEM

DÉTERMINATION DE LA QUALITÉ DE PÉNÉTRATION D'UNE UNITÉ OPTIQUE D'APPAREIL PHOTO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2018 DE 102018222140**

(43) Veröffentlichungstag der Anmeldung:
**25.08.2021 Patentblatt 2021/34**

(73) Patentinhaber: **Siemens Mobility GmbH**
**81739 München (DE)**

(72) Erfinder: **OERTEL, Norbert**
**99867 Gotha (DE)**

(74) Vertreter: **Siemens Patent Attorneys**
**Postfach 22 16 34**
**80506 München (DE)**

(56) Entgegenhaltungen:
**US-A1- 2009 278 950**

• **Hong-Dar Lin ET AL: "A visual inspection system for quality control of optical lenses", International Journal of the Physical Sciences, 2011, Seiten 2701-2709, XP055656488, DOI: 10.5897/IJPS11.540 Gefunden im Internet: URL:http://www.academicjournals.org/app/webroot/article/article1380714216_Lin%20et%20al.pdf**

**Beschreibung**

Die Erfindung wird durch die beigefügten Patentansprüche festgelegt und betrifft ein Verfahren zum Ermitteln einer Durchlassgüte einer Optikeinheit eines Kamerasystems. Kamerasysteme werden immer öfter eingesetzt, um bestimmte technische Komponenten teil- oder vollautomatisch zu überwachen und/oder um Räumlichkeiten bzw. Plätze und die sich darin bzw. darauf aufhaltenden Personen zu überwachen. In der Regel werden die aufgenommenen Bilder von dem Kamerasystem mittels einer Videokompression komprimiert und übertragen. Dabei kann ein Bild für sich komprimiert werden. Um ganze Bildfolgen zu komprimieren, ist es außerdem üblich, Änderungen innerhalb der Bilder zu vorhergehenden Bildern zu erfassen und nur diese zu übertragen.

Um ein Bild zu komprimieren, wird es zunächst mittels eines Helligkeits-Farbigkeits-Farbmodells (z. B. YUV-Modell, YCbCr-Modell usw.) dargestellt. Falls das Bild beispielsweise im RGB-Farbmodell vorliegt, ist also eine Umrechnung in das Helligkeits-Farbigkeits-Farbmodell nötig. Das Bild wird in mehrere Abschnitte eingeteilt. Ein Abschnitt kann beispielsweise 8x8 Pixel oder beispielsweise 16x16 Pixel umfassen. Die ortsaufgelösten Informationen eines jeden Abschnitts werden mittels einer Frequenztransformation in den Frequenzraum transformiert. Die transformierten Informationen können anschließend unter Verwendung von Quantifizierungskoeffizienten quantisiert werden. Die Koeffizienten der sich ergebenden Matrix werden dann nach ihrer Frequenz sortiert. Zur Sortierung der Koeffizienten wird die Matrix zickzackförmig entlang ihrer Gegendiagonalen durchlaufen. Es ergibt sich für jeden Abschnitt eine Folge von Transformationskoeffizienten. Die Transformationskoeffizienten liegen in der jeweiligen Folge nach der Frequenz sortiert vor.

Ein jeweiliger Transformationskoeffizient, insbesondere dessen Betrag, ist jeweils ein Maß für eine Energie bei einem bestimmten Frequenzbereich, auch Frequenzband.

Die komprimierten Bildinformationen können dann von dem Kamerasystem an einen Empfänger übermittelt werden. Der Empfänger dekomprimiert die empfangenen Bildinformationen wieder, sodass die Bilder angezeigt und ggf. ausgewertet werden können.

Ein Problem ist, dass die Optikeinheit des Kamerasystems, insbesondere eine Schutzscheibe der Optikeinheit, mit der Zeit durch Abrieb, durch Schmutzablagerungen und/oder durch andere Umwelteinflüsse verschmutzt und/oder abgenutzt wird, sodass sich die Qualität der von dem Kamerasystem aufgenommen Bilder mit der Zeit reduziert. In diesem Fall muss die Optikeinheit, insbesondere die Schutzscheibe, gewartet werden, beispielsweise gereinigt, poliert oder ausgetauscht.

In der Regel wird ein festes Wartungsintervall festgelegt, welches unabhängig von der konkreten Verschmutzung und/oder Abnutzung und damit unabhängig von der konkreten Notwendigkeit einer Wartung ist. Außerdem kann auch manuell festgestellt werden, dass die Bildqualität nicht mehr ausreicht und eine Wartung durchgeführt werden muss.

In der Patentanmeldung US 2009/0278950 A1 ist ein Warnungsverfahren und Warnungssystem zur Reinigung von Linsen beschrieben. Das System weist eine Bildverarbeitungseinheit auf, die eingerichtet ist, Bilddaten zu analysieren. Anhand der Analyse wird bestimmt, ob die Bilddaten eine Linsenreflexion anzeigen. Ist dies der Fall, wird einem Benutzer eine Anzeige bereitgestellt, dass die Linse verschmutzt ist.

In dem wissenschaftlichen Artikel mit dem Titel "A visual inspection system for quality control of optical lenses" der Autoren Hong-Dar Lin, Yuan-Shyi Peter Chiu und Shih-Vin Hsu (veröffentlicht im International Journal of the Physical Sciences Val. 6(11), pp. 2701-2709, 4 June, 2011) wird ein System zur Qualitätskontrolle von optischen Linsen unter Verwendung von Technik aus dem Bereich der Computer Vision beschrieben.

Eine Aufgabe der Erfindung ist es, ein Verfahren anzugeben, mit dessen Hilfe Rückschlüsse auf eine Verschmutzung und/oder Abnutzung der Optikeinheit gezogen werden können, insbesondere um zu bestimmen, ob eine Wartung der Optikeinheit notwendig ist.

Die Aufgabe wird gelöst durch ein Verfahren zum Ermitteln einer Durchlassgüte einer Optikeinheit eines Kamerasystems, bei dem erfindungsgemäß ortsaufgelöste Informationen zumindest eines Bilds des Kamerasystems unter Verwendung einer Frequenztransformation abschnittsweise transformiert werden, sodass für jeden Abschnitt des zumindest einen Bilds eine Folge von Transformationskoeffizienten ermittelt wird, wobei ein jeweiliger Transformationskoeffizient jeweils ein Maß für eine Energie in einem bestimmten Frequenzbereich ist. Insbesondere kann der Betrag eines jeweiligen Transformationskoeffizienten jeweils ein Maß für die Energie in einem bestimmten Frequenzbereich sein.

Weiter wird zumindest eine Folge von Transformationskoeffizienten ausgewählt, die für die höchsten Frequenzen die höchsten Energien aufweisen. Unter Verwendung der zumindest einen ausgewählten Folge wird eine Verteilung der Frequenzen ermittelt. Die Verteilung der Frequenzen wird mit einer Referenz verglichen, wobei unter Verwendung des Vergleichs die Durchlassgüte der Optikeinheit ermittelt wird.

Auf diese Weise kann die Durchlassgüte im laufenden Betrieb des Kamerasystems ermittelt werden.

Außerdem kann auf diese Weise die Durchlassgüte einfach, ressourcenschonend und/oder kostengünstig ermittelt werden. Insbesondere kann das vorgeschlagene Verfahren - insbesondere mit der Auswertung im Frequenzraum - vorteilhaft gegenüber einer Auswertung der ortsaufgelösten Informationen sein.

Es ist zweckmäßig, wenn die Optikeinheit zumindest eine Optikkomponente aufweist. Eine Optikkomponente kann eine Linse, eine transparente Scheibe, ein Spiegel oder Ähnliches sein. Die transparente Scheibe kann z. B. eine Schutzscheibe sein. Vorzugsweise umfasst die Optikeinheit mehrere Optikkomponenten.

Vorzugsweise ist die Durchlassgüte der Optikeinheit ein Maß dafür, wie groß der Anteil von Licht ist, der die Optikeinheit durchdringt. Insbesondere kann die Durchlassgüte der Optikeinheit ein Maß dafür sein, welcher Anteil an einfallendem Licht die Optikeinheit durchdringt.

Das Kamerasystem kann auf sichtbares Licht und/oder auf nicht sichtbares Licht sensitiv sein. Zweckmäßigerweise ist die Durchlassgüte der Optikeinheit ein Maß dafür, wie groß der Anteil von für das Kamerasystem detektierbarem Licht ist, der die Optikeinheit durchdringt.

Falls die Optikeinheit zumindest eine Linse und/oder zumindest eine transparente Scheibe aufweist, ist die Durchlassgüte vorzugsweise abhängig vom Transmissionsgrad der zumindest einen Linse bzw. der zumindest einen Scheibe.

Falls die Optikeinheit mehrere Optikkomponenten aufweist, ist die Durchlassgüte vorzugsweise abhängig vom Transmissionsgrad des Mediums zwischen den Optikkomponenten.

Falls die Optikeinheit zumindest einen Spiegel aufweist, ist die Durchlassgüte vorzugsweise abhängig vom Reflexionsgrad des zumindest einen Spiegels.

Die ermittelte Durchlassgüte kann als ein Maß für einen Verschmutzungs- und/oder Abnutzungsgrad der Optikeinheit des Kamerasystems herangezogen werden.

Anhand der ermittelten Durchlassgüte kann eine Notwendigkeit einer Wartung der Optikeinheit, insbesondere zum Zwecke einer Reinigung, einer Politur und/oder eines Austauschs zumindest einer der Optikkomponenten der Optikeinheit, abgeleitet werden. Ferner kann anhand der ermittelten Durchlassgüte eine Wartung der Optikeinheit vorausschauend geplant werden.

Die Frequenztransformation kann im Rahmen einer Bild- und/oder Videokompression durchgeführt werden.

Das zumindest eine Bild muss für das vorgeschlagene Verfahren nicht angezeigt werden. Insbesondere ist eine Rücktransformation für das vorgeschlagene Verfahren nicht notwendig.

Die ortsaufgelösten Informationen des zumindest einen Bildes sind vorzugsweise ortsaufgelöste Helligkeitsinformationen.

Das Bild kann ein Farbbild sein. Es ist bevorzugt, wenn das Bild mittels des Helligkeits-Farbigkeits-Farbmodells dargestellt wird. Das Bild kann beispielsweise im Helligkeits-Farbigkeits-Farbraum vorliegen oder in diesen transformiert werden. Weiter kann das Bild ein Graustufenbild sein.

Wie bereits oben erwähnt, wird in dem erfindungsgemäßen Verfahren diejenige zumindest eine Folge von Transformationskoeffizienten ausgewählt, welche für die höchsten Frequenzen die höchsten Energien aufweist.

Sinnvollerweise liegen die Transformationskoeffizienten in einer jeweiligen Folge jeweils nach dem Frequenzbereich sortiert, insbesondere nach dem Frequenzbereich aufsteigend sortiert, vor. Es ist bevorzugt, wenn innerhalb einer jeweiligen Folge auf einen Transformationskoeffizient für einen Frequenzbereich bei geringen Frequenzen ein Transformationskoeffizient für einen Frequenzbereich bei höheren Frequenzen folgt.

Es ist vorteilhaft, wenn bei der Auswahl der zumindest einen Folge von Transformationskoeffizienten die zumindest eine längste Folge von Transformationskoeffizienten ausgewählt wird.

Vorzugsweise gilt als letzter Transformationskoeffizient einer Folge derjenige Transformationskoeffizient, welcher ungleich Null ist und auf welchen - wenn überhaupt - nur noch ein oder mehrere Transformationskoeffizient(en) - insbesondere für (einen) Frequenzbereich(e) bei höheren Frequenzen, kurz: für höhere Frequenzen - folgt/folgen, der/die gleich Null ist/sind.

Mit anderen Worten: Vorzugsweise gehören nur Transformationskoeffizienten zur Folge, welche ungleich Null sind, und/oder für die es zumindest einen Transformationskoeffizienten für höhere Frequenzen gibt, der ungleich Null ist.

Falls mehrere Folgen gleich lang sind, können vorzugsweise diejenigen Folgen ausgewählt werden, deren letzte Transformationskoeffizienten betragsmäßig am höchsten sind.

Bei der Auswahl der zumindest einen Folge von Transformationskoeffizienten können ferner diejenigen Transformationskoeffizienten, welche einer gemeinsamen Gegendiagonalen entstammen, betragsmäßig zu einer Summe aufaddiert werden. Vorzugsweise wird die zumindest eine Folge von Transformationskoeffizienten ausgewählt, welche die meisten Summen aufweist. Ist die Anzahl an Summen gleich, dann wird vorzugsweise die zumindest eine Folge von Transformationskoeffizienten ausgewählt, deren letzte Summe am höchsten ist.

Vorzugsweise ist eine Anzahl vorgegeben, wie viele Folgen von Transformationskoeffizienten auszuwählen sind.

Wie bereits oben erwähnt, wird erfindungsgemäß unter Verwendung der zumindest einen ausgewählten Folge eine Verteilung der Frequenzen ermittelt.

Zur Ermittlung der Verteilung der Frequenzen können diejenigen Transformationskoeffizienten der zumindest einen ausgewählten Folge, welche Transformationskoeffizienten jeweils für gleiche Frequenzbereiche gelten, betragsweise aufaddiert werden. Beispielsweise kann die Summe der Transformationskoeffizienten für einen jeweiligen Frequenzbereich jeweils als Maß für die Häufigkeit der jeweiligen Frequenzen herangezogen werden.

Zur Ermittlung der Transformationskoeffizienten können Quantifizierungskoeffizienten herangezogen/verwendet werden. Insbesondere können die Transformationskoeffizienten quantisierte Transformationskoeffizienten sein.

Falls zur Ermittlung der Transformationskoeffizienten Quantifizierungskoeffizienten verwendet wurden, können bei dem Vergleich der Verteilung der Frequenzen mit einer Referenz die Quantifizierungskoeffizienten berücksichtigt werden.

Ferner können die Transformationskoeffizienten nicht quantisierte Transformationskoeffizienten sein.

Wie bereits oben erwähnt, wird erfindungsgemäß die Verteilung der Frequenzen mit einer Referenz verglichen, wobei unter Verwendung des Vergleichs die Durchlassgüte der Optikeinheit ermittelt wird.

Falls beispielsweise in der Verteilung der Frequenzen der Anteil an bestimmten hohen Frequenzen unterhalb eines vorgegebenen Minimalwerts liegt, kann die Durchlassgüte der Optikeinheit als unzureichend ermittelt werden.

Das heißt, dass die Referenz ein vorgegebener Minimalwert für den Anteil an bestimmten hohen Frequenzen sein kann. In diesem Fall kann der Vergleich beispielsweise eine Schellwertentscheidung sein.

Falls beispielsweise die Verteilung der Frequenzen gegenüber der Referenz zumindest um ein bestimmtes Maß zu niedrigeren Frequenzen hin verschoben ist, kann die Durchlassgüte der Optikeinheit als unzureichend ermittelt werden.

In diesem Fall kann der Vergleich eine Schwellwertentscheidung sein. Weiter kann der Vergleich unter Verwendung eines selbstlernenden Systems, insbesondere eines neuronalen Netzwerkes, durchgeführt werden. Weitere Formen des Vergleichs sind möglich.

Die Referenz kann eine Referenzverteilung sein. Vorzugsweise wurde die Referenzverteilung unter Verwendung eines Referenzbildes desselben Kamerasystems ermittelt.

Weiter kann die Referenz anhand einer solchen Referenzverteilung ermittelt worden sein. Das heißt, dass die Referenz anhand einer Referenzverteilung, die unter Verwendung eines Referenzbildes desselben Kamerasystems ermittelt wurde.

Das Referenzbild kann zu einem früheren Zeitpunkt aufgenommen worden sein als das oben genannte zumindest eine Bild des Kamerasystems.

Die von dem Kamerasystem bei der Aufnahme des zumindest einen Bilds abgebildete Szene ist vorzugsweise zumindest im Wesentlichen dieselbe wie bei der Aufnahme des Referenzbilds.

In einer bevorzugten Ausgestaltung der Erfindung werden für mehrere innerhalb eines vorgegebenen Zeitintervalls aufgenommene Bilder der Schritt der Transformation von ortsaufgelösten Informationen zumindest eines Bilds des Kamerasystems und der Schritt der Auswahl der Folgen von Transformationskoeffizienten mehrmals wiederholt.

Das heißt, dass vorzugsweise für mehrere innerhalb des vorgegebenen Zeitintervalls aufgenommene Bilder jeweils ortsaufgelöste Informationen jeweils zumindest eines Bilds des Kamerasystems unter Verwendung einer Frequenztransformation abschnittsweise transformiert werden, sodass für jeden Abschnitt des jeweiligen zumindest einen Bilds eine Folge von Transformationskoeffizienten ermittelt wird, wobei ein jeweiliger Transformationskoeffizient jeweils ein Maß für eine Energie in einem bestimmten Frequenzbereich ist. Das heißt weiter, dass vorzugsweise für mehrere innerhalb des vorgegebenen Zeitintervalls aufgenommene Bilder - insbesondere aus den für das jeweilige Bild vorliegenden Folgen von Transformationskoeffizienten - jeweils zumindest eine Folge von Transformationskoeffizienten ausgewählt wird, die für die höchsten Frequenzen die höchsten Energien aufweist.

Vorzugsweise wird für die mehreren innerhalb des vorgegebenen Zeitintervalls aufgenommenen Bilder unter Verwendung der ausgewählten Folgen der Transformationskoeffizienten eine gemittelte Frequenzverteilung ermittelt.

Zweckmäßigerweise wird die gemittelte Frequenzverteilung mit der Referenz verglichen, wobei unter Verwendung des Vergleichs die Durchlassgüte der Optikeinheit ermittelt wird.

Das Zeitintervall kann mehrere Stunden und/oder mehrere Tage umfassen. Auf diese Weise kann der Einfluss von wetterbedingten und/oder tageszeitabhängigen Helligkeitsschwankungen auf die Frequenzverteilung reduziert werden.

Falls das Kamerasystem mehrere Bilder aufnimmt, ist es vorteilhaft, wenn die von dem Kamerasystem abgebildete Szene bei der Aufnahme der mehreren Bilder zumindest im Wesentlichen unverändert bleibt. Insbesondere ist es vorteilhaft, wenn das Kamerasystem bei der Aufnahme der mehreren Bilder auf dieselbe Szene, insbesondere auf denselben Gegenstand, gerichtet ist/bleibt. Insbesondere ändert sich eine Ausrichtung des Kamerasystems bei der Aufnahme der mehreren Bilder nicht.

Bei der Aufnahme der mehreren Bilder sind Änderungen der Helligkeit und/oder Veränderungen im Hintergrund, wie beispielsweise ein durch das Bild fliegender Vogel, ein durch das Bild fliegendes Flugzeug und/oder sich verändernde Wolkenformationen, möglich. Bei der Aufnahme der mehreren Bilder sind außerdem Änderungen der Durchlassgüte der Optikeinheit, wie beispielsweise aufgrund von Verschmutzung und/oder Abnutzung, möglich.

Die mehreren Bilder können mehrere Bilder sein, deren ortsaufgelöste Informationen transformiert werden. Weiter kann eines der mehreren Bilder das zuvor genannte Referenzbild sein.

Das zumindest eine Bild des Kamerasystems kann zur Überwachung einer Komponente einer technischen Einheit verwendet werden. Insbesondere kann die zu überwachende Komponente in der Szene abgebildet werden.

Beispielsweise können die Folgen von Transformationskoeffizienten für die Abschnitte des zumindest einen Bildes innerhalb eines Signals von dem Kamerasystem an eine Empfangseinheit übermittelt werden. Vorzugsweise wird die zumindest eine auszuwählende Folge von Transformationskoeffizienten aus dem Signal ausgewählt und herausgefiltert. Weiter kann die Verteilung der Frequenzen insbesondere unter Verwendung der zumindest einen ausgewählten und herausgefilterten Folge von Transformationskoeffizienten ermittelt werden.

Das Signal kann beispielsweise ein komprimierter Videostrom sein.

Unter Verwendung des vorgeschlagenen Verfahrens kann auf eine Rück-Transformation der im komprimierten Videostrom bereits vorliegenden Transformationskoeffizienten zurück zu ortsaufgelösten Informationen verzichtet werden.

Die Frequenztransformation kann beispielsweise eine FourierTransformation sein. Weiter kann die Frequenztransformation beispielsweise eine Wavelet-Transformation sein.

Es ist vorteilhaft, wenn die Frequenztransformation eine Cosinus-Transformation ist. Insbesondere kann die Frequenztransformation eine diskrete Cosinus-Transformation oder eine integer Cosinus-Transformation sein.

Zweckmäßigerweise wird anhand der ermittelten Durchlassgüte eine Notwendigkeit einer Wartung der Optikeinheit zum Zwecke einer Reinigung, einer Politur und/oder eines Austauschs zumindest einer der Optikkomponenten der Optikeinheit ermittelt.

Beispielsweise kann die ermittelte Durchlassgüte unzureichend sein. Im Falle einer unzureichenden Durchlassgüte kann vorzugsweise eine Notwendigkeit einer Wartung der Optikeinheit festgestellt werden. Beispielsweise kann bei der Wartung der Optikeinheit eine Reinigung, eine Politur und/oder ein Austausch zumindest einer der Optikkomponenten der Optikeinheit erfolgen.

Beispielsweise kann die ermittelte Durchlassgüte ausreichend sein. Im Falle einer ausreichenden Durchlassgüte ist vorzugsweise eine Wartung der Optikeinheit nicht notwendig.

Es sind weitere Abstufungen der ermittelten Durchlassgüte möglich. Beispielsweise kann die ermittelte Durchlassgüte mittelmäßig sein. Im Falle einer mittelmäßigen Durchlassgüte kann beispielsweise festgestellt werden, dass die Notwendigkeit einer Wartung der Optikeinheit näher rückt.

Ferner ist die Erfindung gerichtet auf eine Auswerteeinheit zum Ermitteln einer Durchlassgüte einer Optikeinheit eines Kamerasystems.

Die Auswerteeinheit ist erfindungsgemäß dazu eingerichtet, aus mehreren Folgen von Transformationskoeffizienten, welche anhand von ortsaufgelöste Informationen zumindest eines Bildes des Kamerasystems unter Verwendung einer Frequenztransformation derart erzeugt wurden, dass für jeden Abschnitt des zumindest einen Bilds eine Folge von Transformationskoeffizienten ermittelt wird, wobei ein jeweiliger Transformationskoeffizient jeweils ein Maß für eine Energie in einem bestimmten Frequenzbereich ist, zumindest eine Folge von Transformationskoeffizienten auszuwählen, welche für die höchsten Frequenzen die höchsten Energien aufweist.

Außerdem ist die Auswerteeinheit dazu eingerichtet, unter Verwendung der zumindest einen ausgewählten Folge eine Verteilung der Frequenzen zu ermitteln.

Weiter ist die Auswerteeinheit dazu eingerichtet, die Verteilung der Frequenzen mit einer Referenz zu vergleichen und unter Verwendung des Vergleichs die Durchlassgüte der Optikeinheit zu ermitteln.

Die Auswerteeinheit kann zur Durchführung des oben beschriebenen Verfahrens genutzt werden.

Die Auswerteeinheit kann ein Filterelement aufweisen. Vorzugsweise ist das Filterelement dazu eingerichtet, die zumindest eine auszuwählende Folge von Transformationskoeffizienten aus einem Videostrom, welcher von dem Kamerasystem an eine Empfangseinheit übermittelt wird, auszuwählen und herauszufiltern.

Das Filterelement kann z. B. ein Proxy sein, der insbesondere zwischen das Kamerasystem und die Empfangseinheit geschaltet ist. Weiter kann das Filterelement auch Teil des Kamerasystems oder der Empfangseinheit sein.

Die Empfangseinheit kann beispielsweise ein Videorekorder sein. Es sind aber auch andere Empfangseinheiten denkbar.

Weiter ist die Erfindung gerichtet auf ein System mit einem Kamerasystem und der zuvor genannten Auswerteeinheit und/oder einer seiner Weiterbildungen.

Zweckmäßigerweise umfasst das Kamerasystem eine Optikeinheit, insbesondere die zuvor genannte Optikeinheit. Die Optikeinheit weist vorzugsweise zumindest eine Optikkomponente auf.

Vorzugsweise ist das Kamerasystem dazu eingerichtet, ein Bild oder mehrere Bilder mit ortsaufgelösten Informationen aufzunehmen.

Weiter ist es bevorzugt, wenn das Kamerasystem dazu eingerichtet ist, ortsaufgelöste Informationen zumindest eines Bilds des Kamerasystems, insbesondere zumindest eines der aufgenommenen Bilder, unter Verwendung einer Frequenztransformation abschnittsweise zu transformieren, sodass für jeden Abschnitt des zumindest einen Bilds eine Folge von Transformationskoeffizienten ermittelt wird.

Zweckmäßigerweise ist ein jeweiliger Transformationskoeffizient jeweils ein Maß für eine Energie in einem bestimmten Frequenzbereich.

Ferner ist die Erfindung gerichtet auf eine Verwendung des zuvor genannten Verfahrens und/oder der zuvor genannten Auswerteeinheit und/oder des zuvor genannten Systems bzw. eine deren Weiterbildungen zum Ermitteln eines Verschmutzungs- und/oder Abnutzungsgrads einer transparenten Schutzscheibe der Optikeinheit des Kamerasystems.

Bei der Verwendung kann beispielsweise angenommen werden, dass eine Verschmutzung und/oder Abnutzung anderer Optikkomponenten der Optikeinheit vernachlässigbar ist gegenüber einer Verschmutzung und/oder Abnutzung der Schutzscheibe.

Insbesondere kann das Kamerasystem an einem Fahrzeug angebracht sein. Beispielsweise kann das Kamerasystem außen an dem Fahrzeug angebracht sein.

Das Fahrzeug kann beispielsweise ein Schienenfahrzeug sein.

Beispielsweise kann das Kamerasystem zur Überwachung einer Komponente des Fahrzeugs, insbesondere des Schienenfahrzeugs, verwendet werden. Die Komponente kann beispielsweise ein Pantograf des Schienenfahrzeugs sein.

Falls das Kamerasystem an einem Fahrzeug angebracht ist, kann zumindest der Vergleich auf der Landseite erfolgen. Insbesondere können die Transformationskoeffizienten und/oder kann die Verteilung der Frequenzen von dem Fahrzeug unter Verwendung einer Datenverbindung an die Landseite übermittelt werden. Zweckmäßigerweise ist die Datenverbindung eine drahtlose Datenverbindung.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, der erfindungsgemäßen Auswerteeinheit, dem erfindungsgemäßen System und der erfindungsgemäßen Verwendung kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

FIG 1 ein Flussdiagramm zur schematischen Darstellung des erfindungsgemäßen Verfahrens,

FIG 2 ein System mit einem Kamerasystem und einer Auswerteeinheit zur Durchführung des erfindungsgemäßen Verfahrens nach FIG 1,

FIG 3 ein Diagramm, welches eine Verteilung der Frequenzen zeigt, die unter Verwendung einer Auswahl von Folgen von Transformationskoeffizienten ermittelt wurde, wobei die Folgen von Transformationskoeffizienten anhand von ortsaufgelösten Informationen zumindest eines Bildes des Kamerasystems unter Verwendung einer Frequenztransformation erzeugt wurden, und

FIG 4 ein Diagramm, welches eine Referenzverteilung zeigt.

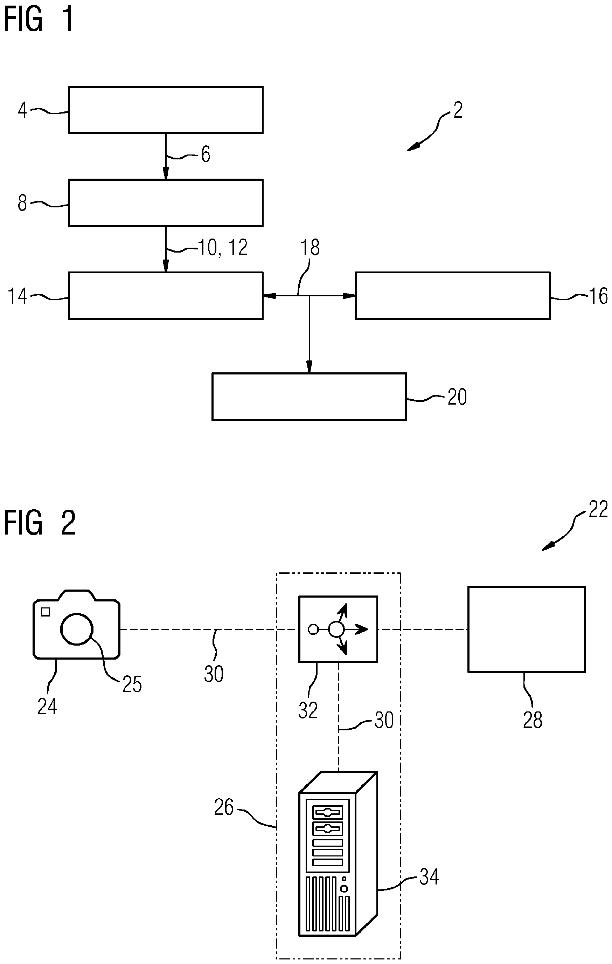

FIG 1 zeigt ein Flussdiagramm 2 zur schematischen Darstellung des erfindungsgemäßen Verfahrens zum Ermitteln einer Durchlassgüte einer Optikeinheit 25 eines Kamerasystems 24 (vgl. FIG 2). Die Optikeinheit 25 weist zumindest eine Optikkomponente auf.

Bei dem Verfahren liegen ortsaufgelöste Informationen 4 zumindest eines Bilds eines Kamerasystems 24 vor. Die ortsaufgelösten Informationen 4 sind ortsaufgelöste Helligkeitsinformationen des zumindest einen Bildes.

Im Zusammenhang mit FIG 1 wird das Verfahren unter Verwendung von ortsaufgelösten Informationen 4 eines einzigen Bilds beschrieben.

Bei dem Verfahren werden die ortsaufgelösten Informationen 4 des Bilds unter Verwendung einer Frequenztransformation 6 abschnittsweise transformiert, sodass für jeden Abschnitt des Bilds eine Folge 8 von Transformationskoeffizienten ermittelt wird.

Zur Ermittlung der Folgen 8 von Transformationskoeffizienten werden die ortsaufgelösten Informationen 4 eines jeden Abschnitts mittels einer Frequenztransformation 6 in den Frequenzraum transformiert und können dann unter Verwendung von Quantifizierungskoeffizienten quantisiert werden. Die Koeffizienten der sich ergebenden Matrix werden dann nach ihrer Frequenz sortiert. Zur Sortierung der Koeffizienten wird die Matrix zickzackförmig entlang ihrer Gegendiagonalen durchlaufen. Es ergibt sich für jeden Abschnitt eine Folge von Transformationskoeffizienten. Die Transformationskoeffizienten liegen in der jeweiligen Folge 8 nach der Frequenz f sortiert vor.

Ein jeweiliger Transformationskoeffizient ist jeweils ein Maß für eine Energie in einem bestimmten Frequenzbereich.

Je größer ein jeweiliger Transformationskoeffizient in einem bestimmten Frequenzbereich ist, desto größer ist der Anteil dieses Frequenzbereichs in dem jeweiligen Abschnitt des Bilds.

Weiter wird - insbesondere aus den vielen Folgen 8 für das eine Bild - zumindest eine Folge 8 von Transformationskoeffizienten ausgewählt (Auswahl 10), welche für die höchsten Frequenzen f die höchsten Energien aufweist. In diesem Beispiel werden mehrere solcher Folgen 8 von Transformationskoeffizienten ausgewählt. Beispielsweise können zehn Folgen von Transformationskoeffizienten ausgewählt werden, wobei diese zehn Folgen 8 für die höchsten Frequenzen f die höchsten Energien aufweisen.

Die Transformationskoeffizienten liegen in einer jeweiligen Folge 8 jeweils nach dem Frequenzbereich aufsteigend sortiert vor.

Hierzu wird ein Beispiel für quantisierte Matrizen gegeben, anhand welchen jeweils eine Folge 8 von Transformationskoeffizienten ermittelt wird:

$$
\text{Matrix a:} \quad
\begin{bmatrix}
78 & 11 & 8 & 3 & 0 & 0 & 0 & 0 \\
2 & 0 & 0 & 0 & 0 & 0 & 0 & 0 \\
5 & 0 & 0 & 0 & 0 & 0 & 0 & 0 \\
0 & 0 & 0 & 0 & 0 & 0 & 0 & 0 \\
1 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0
\end{bmatrix}
$$

$$
\text{Matrix b:} \quad
\begin{bmatrix}
92 & 12 & 6 & 3 & 0 & 0 & 0 & 0 \\
-3 & 0 & 0 & 0 & 0 & 0 & 0 & 0 \\
4 & 1 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0
\end{bmatrix}
$$

$$
\text{Matrix c:} \quad
\begin{bmatrix}
80 & 10 & 5 & 3 & 0 & 0 & 0 & 0 \\
2 & 0 & 0 & 0 & 0 & 0 & 0 & 0 \\
4 & -3 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0
\end{bmatrix}
$$

Anhand dieser Matrizen können beispielhaft die nachstehenden Folgen 8 von Transformationskoeffizienten (Folgen a, b, c) ermittelt werden:

Folge a: [78, 11, 2, 5, 0, 8, 3, 0, 0, 0, 1]
Folge b: [92, 12, -3, 4, 0, 6, 3, 0, 1]
Folge c: [80, 10, 2, 4, 0, 5, 3, 0, -3]

Zur Auswahl der zumindest einen Folge 8 von Transformationskoeffizienten, welche für die höchsten Frequenzen f die höchsten Energien aufweist, kann wie folgt vorgegangen werden:

Folge a ist länger als Folge b oder Folge c, also hat Folge a einen Transformationskoeffizienten (nämlich den letzten in der Folge) in einem Frequenzbereich bei höheren Frequenzen als Folge b oder c. Folglich weist Folge a in diesem Beispiel für die höchsten Frequenzen die höchsten Energien auf. In den Folgen b und c dagegen fehlt ein Frequenzanteil bei denselben Frequenzen.

Die Folgen b und c sind gleich lang. Also haben Folge b und Folge c jeweils den letzten Transformationskoeffizienten in einem Frequenzbereich bei gleichhohen Frequenzen.

Der Betrag eines Transformationskoeffizienten ist ein Maß für eine Energie in einem bestimmten Frequenzbereich. Der Betrag des letzten Transformationskoeffizienten der Folge c ist höher als der Betrag des letzten Transformationskoeffizienten der Folge b. Folglich weist Folge c in diesem Beispiel für die gleichen höchsten Frequenzen (d. h. für den gleichen höchsten Frequenzbereich) der Folge 8 die höhere Energie auf.

Bei der Auswahl werden die längsten Folgen 8 von Transformationskoeffizienten ausgewählt. Liegen gleich lange Folgen 8 vor, so werden die Beträge der Transformationskoeffizienten verglichen, begonnen bei dem letzten Transformationskoeffizienten.

Zur Auswahl der zumindest einen Folge 8 von Transformationskoeffizienten, welche für die höchsten Frequenzen f die höchsten Energien aufweist, kann alternativ wie folgt vorgegangen werden:

Bei der Auswahl der zumindest einen Folge 8 von Transformationskoeffizienten können diejenigen Transformationskoeffizienten, welche einer gemeinsamen Gegendiagonalen entstammen, betragsmäßig zu einer Summe aufaddiert werden.

Für die oben beispielhaft angegebenen Folgen 8 (a, b, c) ergeben sich beispielhaft folgende Summen:

Summen der Folge a: [78; 13; 13; 3; 1]
Summen der Folge b: [92; 15; 10; 4]
Summen der Folge c: [80; 12; 9; 6]

Die Folge a von Transformationskoeffizienten weist die meisten Summen auf. Folglich weist Folge a in diesem Beispiel für die höchsten Frequenzen die höchsten Energien auf.

Die Anzahl an Summen ist für die Folgen b und c gleich. Also haben die Folge b und Folge c jeweils die letzten Transformationskoeffizienten, welche einer gemeinsamen Gegendiagonalen entstammen, in einem Frequenzbereich bei gleichhohen Frequenzen.

Die letzte Summe von Folge c ist größer als die letzte Summe von Folge b. Folglich weist Folge c in diesem Beispiel für den gleichen höchsten Frequenzbereich die höhere Energie auf.

Bei der Auswahl der zumindest einen Folge 8 von Transformationskoeffizienten kann die zumindest eine Folge 8 von Transformationskoeffizienten ausgewählt, welche die meisten Summen aufweist. Ist die Anzahl an Summen gleich, dann kann die zumindest eine Folge 8 von Transformationskoeffizienten ausgewählt werden, deren letzte Summe am höchsten ist.

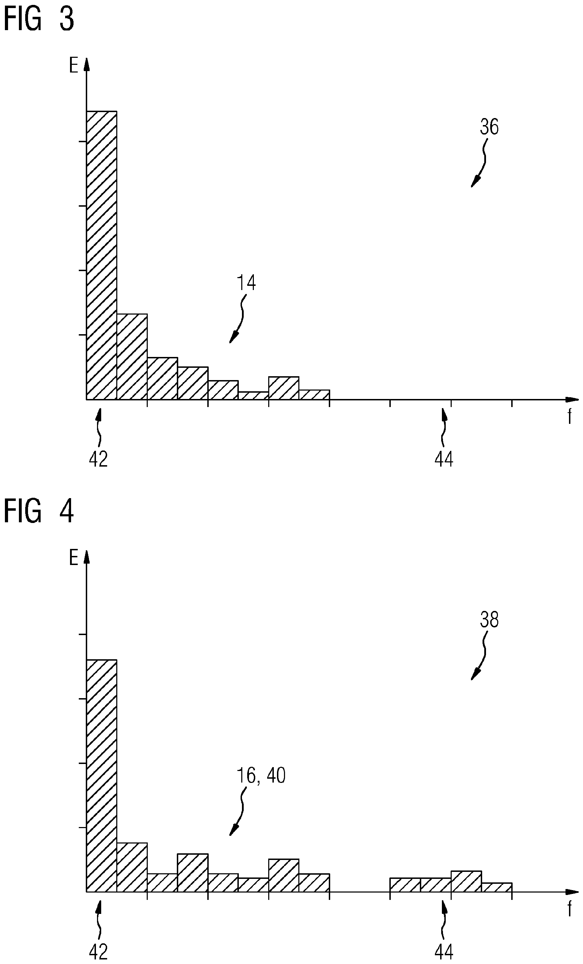

Unter Verwendung der ausgewählten Folgen 8 wird eine Verteilung 14 der Frequenzen f (vgl. FIG 3) ermittelt (Ermittlung 12). Zur Ermittlung 12 der Verteilung 14 der Frequenzen f können beispielsweise die Transformationenkoeffizienten der ausgewählten Folgen 8 für die jeweiligen Frequenzbereiche betragsweise aufaddiert werden (vgl. FIG 3).

Die Verteilung 14 der Frequenzen f wird mit einer Referenz 16 (vgl. FIG 4) verglichen (Vergleich 18), wobei unter Verwendung des Vergleichs 18 die Durchlassgüte 20 der Optikeinheit 25 des Kamerasystems 24 ermittelt wird (vgl. FIG 4). Bei dem Vergleich 18 können die Quantisierungskoeffizienten, welche bei der Ermittlung der Transformationskoeffizienten verwendet wurden, berücksichtigt werden.

FIG 2 zeigt schematisch ein System 22 mit einem Kamerasystem 24 und einer Auswerteeinheit 26. In diesem Beispiel umfasst das System 22 außerdem eine Empfangseinheit 28.

Das Kamerasystem 24 umfasst eine Optikeinheit 25. Die Optikeinheit 25 weist zumindest eine Optikkomponente, in der Regel mehrere Optikkomponenten, auf. Eine Optikkomponente kann eine Linse und/oder ein Spiegel sein, aber auch z. B. eine Schutzscheibe. Eine Schutzscheibe kann z. B. zum Schutz einer Linse oder eines Spiegels vor Verschmutzung, Beschädigung, etc. eingesetzt werden.

Das Kamerasystem 24 ist vorzugsweise das in FIG 1 genannte Kamerasystem. Insbesondere kann das System 22 zur Durchführung des im Zusammenhang mit FIG 1 beschriebenen Verfahrens verwendet werden.

Das Kamerasystem 24 nimmt zumindest ein Bild auf. In diesem Beispiel nimmt das Kamerasystem 24 mehrere Bilder, insbesondere in Form eines Videos, auf.

Mittels des Kamerasystems 24 wird eine Komponente einer technischen Einheit (nicht gezeigt) überwacht. Das Kamerasystem 24 ist dauerhaft auf eine bestimmte Szene mit der zu überwachenden Komponente gerichtet. Die Ausrichtung des Kamerasystems bezüglich der Komponente ändert sich nicht.

Auf diese Weise kann sichergestellt werden, dass die von dem Kamerasystem 24 abgebildete Szene bei der Aufnahme von mehreren Bildern zumindest im Wesentlichen unverändert bleibt.

Das Kamerasystem 24 ist über eine Datenverbindung 30 mit der Empfangseinheit 28 verbunden.

Die aufgenommenen Bilder werden von dem Kamerasystem 24 mittels einer Videokompression komprimiert. Die in FIG 1 genannte Frequenztransformation 6 findet im Rahmen dieser Videokompression statt. Beispielsweise kann die Frequenztransformation 6 eine Cosinus-Transformation sein.

Da es sich um eine Videokompression handelt, wird innerhalb eines vorgegebenen Zeitintervalls der Schritt der Transformation von ortsaufgelösten Informationen 4 zumindest eines Bilds des Kamerasystems 24 mehrmals wiederholt.

Bei der Videokompression wird ein komprimierter Videostrom erzeugt, welcher die in FIG 1 genannten Folgen 8 von Transformationskoeffizienten aufweist.

Der komprimierte Videostrom wird von dem Kamerasystem 24 über die Datenverbindung 30 an die Empfangseinheit 28 übermittelt.

Die Auswerteeinheit 26 umfasst ein Filterelement 32, welches dazu eingerichtet ist, die auszuwählenden Folgen 8 von Transformationskoeffizienten aus einem komprimierten Videostrom, welcher von dem Kamerasystem 24 an eine Empfangseinheit 28 übermittelt wird, auszuwählen und herauszufiltern.

Innerhalb des vorgegebenen Zeitintervalls wird der Schritt der Auswahl der Folgen von Transformationskoeffizienten mehrmals wiederholt. Beispielsweise können innerhalb des vorgegebenen Zeitintervalls zu unterschiedlichen Zeitpunkten jeweils auszuwählenden Folgen 8 von Transformationskoeffizienten ausgewählt und herausgefiltert werden.

Das Filterelement 32 ist in diesem Beispiel als Proxy ausgeführt und zwischen dem Kamerasystem 24 und die Empfangseinheit 28 zwischengeschaltet.

Ferner umfasst die Auswerteeinheit 26 eine Rechnereinheit 34. Die Rechnereinheit 34 ist mit dem Filterelement 32 über eine weitere Datenverbindung 30 verbunden.

Die ausgewählten (und herausgefilterten) Folgen 8 von Transformationskoeffizienten werden von dem Filterelement 32 über die weitere Datenverbindung 30 an die Rechnereinheit 34 der Auswerteeinheit 26 übermittelt.

Die Rechnereinheit 34 der Auswerteeinheit 26 ist dazu eingerichtet, unter Verwendung der ausgewählten Folgen 8 die Verteilung 14 der Frequenzen f (vgl. FIG 3) zu ermitteln, die Verteilung 14 der Frequenzen f mit einer Referenz 16 (vgl. FIG 4) zu vergleichen (Vergleich 18) und unter Verwendung des Vergleichs 18 die Durchlassgüte 20 der Optikeinheit 25 des Kamerasystems 24 zu ermitteln.

Beispielsweise kann für das vorgegebene Zeitintervall unter Verwendung der in dem Zeitintervall ausgewählten Folgen 8 als Verteilung 14 der Frequenzen f eine gemittelte Frequenzverteilung ermittelt werden.

Als Zeitintervall kann ein Intervall von mehreren Stunden oder Tagen vorgegeben werden, sodass ein Einfluss von Wetterbedingungen und tageszeitabhängigen Helligkeitsschwankungen verringert wird.

FIG 3 zeigt ein Diagramm 36, welches beispielhaft eine Verteilung 14 der Frequenzen f zeigt. Es kann sich hierbei um eine gemittelte Frequenzverteilung handeln.

Die Verteilung 14 der Frequenzen f wurde, wie unter FIG 1 und FIG 2 beschrieben, unter Verwendung einer Auswahl von Folgen 8 von Transformationskoeffizienten ermittelt, wobei die Folgen 8 von Transformationskoeffizienten anhand von ortsaufgelösten Informationen 4 zumindest eines Bildes eines Kamerasystems 24 unter Verwendung einer Frequenztransformation 6 erzeugt wurden.

Zur Ermittlung der Verteilung 14 der Frequenzen f wurden diejenigen Transformationskoeffizienten der ausgewählten Folgen 8, welche Transformationskoeffizienten jeweils für die gleichen Frequenzen, d. h. den gleichen Frequenzbereich, gelten, betragsweise aufaddiert.

Da ein Betrag eines jeweiligen Transformationskoeffizienten jeweils ein Maß für eine Energie E in einem bestimmten Frequenzbereich ist, ist die betragsmäßige Summe mehrerer Transformationskoeffizienten wiederum ein Maß für eine Energie E.

In dem Diagramm 36 ist auf der x-Achse die Frequenz f aufgetragen. Auf der y-Achse ist die Energie E aufgetragen.

Die Verteilung 14 der Frequenzen f ist als Säulendiagramm dargestellt.

Die höchste Energie E ist im Bereich 42 der geringsten Frequenzen f (zeichnungsgemäß ganz links) zu verzeichnen.

Die im Diagramm 36 beispielhaft dargestellte Verteilung 14 der Frequenzen f wird mit einer Referenz 16 (vgl. FIG 4) verglichen (Vergleich 18). In diesem Beispiel ist die Referenz 16 eine Referenzverteilung 40.

FIG 4 zeigt ein Diagramm 38, welches beispielhaft eine Referenzverteilung 40 zeigt.

Die Referenzverteilung 40 kann in analoger Weise wie die Verteilung 14 der Frequenzen f in FIG 3, jedoch unter Verwendung der ortsaufgelösten Informationen 4 zumindest eines Referenzbildes, ermittelt werden. Das zumindest eine Referenzbild kann beispielsweise das/die erste(n) mittels des Kamerasystems 24 ausgenommene(n) Bild(er) bei der Überwachung der Komponente sein. Insbesondere ist die von dem Kamerasystem 24 in dem Referenzbild abgebildete Szene dieselbe wie bei der Ermittlung des in FIG 1 und FIG 2 genannten zumindest einen Bilds.

In dem Diagramm 38 ist - in analoger Weise zu Diagramm 36 in FIG 3 - auf der x-Achse die Frequenz f und auf der y-Achse ist die Energie E aufgetragen. Die Referenzverteilung 40 ist als Säulendiagramm dargestellt.

Auch hier ist die höchste Energie E im Bereich 42 der geringsten Frequenzen f (zeichnungsgemäß ganz links) zu verzeichnen. Jedoch ist festzustellen, dass Energien E in einem Bereich 44 bei höheren Frequenzen f, d. h. in höheren Frequenzbereichen, ermittelt wurden (zeichnungsgemäß rechts) als im Diagramm 36 in FIG 3.

Bei dem Vergleich der Verteilung 14 der Frequenzen f aus FIG 3 mit der als Referenzverteilung 40 ausgebildeten Referenz 16 in FIG 4 wird folglich festgestellt, dass in der Verteilung 14 der Frequenzen f der Anteil an hohen Frequenzen f, d. h. an Frequenzen im Bereich 44, auf Null abgesunken ist.

Bei dem Vergleich kann weiter festgestellt werden, dass die Verteilung 14 der Frequenzen f gegenüber der Referenzverteilung 40 deutlich zu niedrigeren Frequenzen hin verschoben ist.

Anhand des Vergleichs wird die Durchlassgüte 20 der Optikeinheit 25 (vgl. FIG 2) als unzureichend ermittelt.

Anhand der ermittelten Durchlassgüte 20 wird eine Notwendigkeit einer Wartung der Optikeinheit 25, bei der beispielsweise zumindest eine Optikkomponente der Optikeinheit 25 gereinigt, poliert und/oder ausgetauscht wird, ermittelt. Da die ermittelte Durchlassgüte 20 "unzureichend" ist, wird festgestellt, dass eine Reinigung der transmittierenden Optikkomponenten des Kamerasystems 24 notwendig ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1.  Verfahren zum Ermitteln einer Durchlassgüte (20) einer Optikeinheit (25) eines Kamerasystems (24), bei dem

    - ortsaufgelöste Informationen (4) zumindest eines Bilds des Kamerasystems (24) unter Verwendung einer Frequenztransformation (6) abschnittsweise transformiert werden, sodass für jeden Abschnitt des zumindest einen Bilds eine Folge (8) von Transformationskoeffizienten ermittelt wird, wobei ein jeweiliger Transformationskoeffizient jeweils ein Maß für eine Energie (E) in einem bestimmten Frequenzbereich ist,
    - zumindest eine Folge (8) von Transformationskoeffizienten ausgewählt wird (10), welche für die höchsten Frequenzen (f) die höchsten Energien (E) aufweist,
    - unter Verwendung der zumindest einen ausgewählten Folge (8) eine Verteilung (14) der Frequenzen (f) ermittelt wird (12) und
    - die Verteilung (14) der Frequenzen (f) mit einer Referenz (16) verglichen wird (18), wobei unter Verwendung des Vergleichs (18) die Durchlassgüte (20) der Optikeinheit (25) zur Bestimmung von Rückschlüssen auf eine Verschmutzung und/oder Abnutzung der Optikeinheit ermittelt wird.

2.  Verfahren nach Anspruch 1,
    **dadurch gekennzeichnet, dass**
    die ortsaufgelösten Informationen (4) des zumindest einen Bildes ortsaufgelöste Helligkeitsinformation sind.

3.  Verfahren nach Anspruch 1 oder 2,
    **dadurch gekennzeichnet, dass**
    die Transformationskoeffizienten in einer jeweiligen Folge (8) jeweils nach dem Frequenzbereich aufsteigend sortiert vorliegen.

4.  Verfahren nach einem der vorhergehenden Ansprüche,
    **dadurch gekennzeichnet, dass**
    bei der Auswahl (10) der zumindest einen Folge (8) von Transformationskoeffizienten die zumindest eine längste Folge (8) von Transformationskoeffizienten ausgewählt wird.

5.  Verfahren nach einem der vorhergehenden Ansprüche,
    **dadurch gekennzeichnet, dass**,

    falls in der Verteilung (14) der Frequenzen (f) der Anteil an bestimmten hohen Frequenzen (f) unterhalb eines vorgegebenen Minimalwerts liegt,
    die Durchlassgüte (20) der Optikeinheit (25) als unzureichend ermittelt wird.

6.  Verfahren nach einem der vorhergehenden Ansprüche,

**dadurch gekennzeichnet, dass**,

falls die Verteilung (14) der Frequenzen (f) gegenüber der Referenz (16) zumindest um ein bestimmtes Maß zu niedrigeren Frequenzen (f) hin verschoben ist,
die Durchlassgüte (20) der Optikeinheit (25) als unzureichend ermittelt wird.

7.  Verfahren nach einem der vorhergehenden Ansprüche,
**dadurch gekennzeichnet, dass**

die Referenz (16) eine Referenzverteilung (40) ist, welche unter Verwendung eines Referenzbildes desselben Kamerasystems (24) ermittelt wurde, oder dass
die Referenz (16) anhand einer solchen Referenzverteilung (40) ermittelt wurde.

8.  Verfahren nach einem der vorhergehenden Ansprüche,
**dadurch gekennzeichnet, dass**

für mehrere innerhalb eines vorgegebenen Zeitintervalls aufgenommene Bilder
der Schritt der Transformation (6) von ortsaufgelösten Informationen (4) zumindest eines Bilds des Kamerasystems (24) und der Schritt der Auswahl (10) der zumindest einen Folge (8) von Transformationskoeffizienten mehrmals wiederholt werden, unter Verwendung der ausgewählten Folgen (8) der Transformationskoeffizienten eine gemittelte Frequenzverteilung ermittelt wird und
die gemittelte Frequenzverteilung mit der Referenz (16) verglichen wird (18), wobei unter Verwendung des Vergleichs (18) die Durchlassgüte (20) der Optikeinheit (25) ermittelt wird.

9.  Verfahren nach einem der vorhergehenden Ansprüche,
**dadurch gekennzeichnet, dass**,

falls das Kamerasystem (24) mehrere Bilder aufnimmt,
eine von dem Kamerasystem (24) abgebildete Szene bei der Aufnahme der mehreren Bilder zumindest im Wesentlichen unverändert bleibt.

10. Verfahren nach einem der vorhergehenden Ansprüche,
**dadurch gekennzeichnet, dass**

die Folgen (8) von Transformationskoeffizienten für die Abschnitte des zumindest einen Bildes innerhalb eines Signals, insbesondere innerhalb eines komprimierten Videostroms, von dem Kamerasystem (24) an eine Empfangseinheit (28) übermittelt werden und
die zumindest eine auszuwählende Folge (8) von Transformationskoeffizienten aus dem Signal, insbesondere aus dem komprimierten Videostrom, ausgewählt und herausgefiltert wird, wobei die Verteilung (14) der Frequenzen (f) unter Verwendung der zumindest einen ausgewählten und herausgefilterten Folge (8) von Transformationskoeffizienten ermittelt wird.

11. Verfahren nach einem der vorhergehenden Ansprüche,
**dadurch gekennzeichnet, dass**
anhand der ermittelten Durchlassgüte (20) eine Notwendigkeit einer Wartung der Optikeinheit (25) zum Zwecke einer Reinigung, einer Politur und/oder eines Austauschs zumindest einer Optikkomponente der Optikeinheit (25) ermittelt wird.

12. Auswerteeinheit (26) zum Ermitteln einer Durchlassgüte (20) einer Optikeinheit (25) eines Kamerasystems (24), welche dazu eingerichtet ist,

- aus mehreren Folgen (8) von Transformationskoeffizienten, welche anhand von ortsaufgelösten Informationen (4) zumindest eines Bildes des Kamerasystems (24) unter Verwendung einer Frequenztransformation (6) derart erzeugt wurden, dass für jeden Abschnitt des zumindest einen Bilds eine Folge (8) von Transformationskoeffizienten ermittelt wird, wobei ein jeweiliger Transformationskoeffizient jeweils ein Maß für eine Energie (E) in einem bestimmten Frequenzbereich ist, zumindest eine Folge (8) von Transformationskoeffizienten auszuwählen (10), welche für die höchsten Frequenzen (f) die höchsten Energien (E) aufweist,
- unter Verwendung der zumindest einen ausgewählten Folge (8) eine Verteilung (14) der Frequenzen (f) zu ermitteln (12) und
- die Verteilung (14) der Frequenzen (f) mit einer Referenz (16) zu vergleichen (18) und unter Verwendung des Vergleichs (18) die Durchlassgüte (20) der Optikeinheit (25) zur Bestimmung von Rückschlüssen auf eine Verschmutzung und/oder Abnutzung der Optikeinheit zu ermitteln.

**13.** Auswerteeinheit (26) nach Anspruch 12,
**gekennzeichnet durch**

ein Filterelement (32), welches dazu eingerichtet ist,
die zumindest eine auszuwählende Folge (8) von Transformationskoeffizienten aus einem komprimierten Videostrom, welcher von dem Kamerasystem (24) an eine Empfangseinheit (28) übermittelt wird, auszuwählen und herauszufiltern.

**14.** System (22) mit einem Kamerasystem (24) und der Auswerteeinheit (26) nach einem der Ansprüche 12 oder 13,

wobei das Kamerasystem (24) dazu eingerichtet ist,
ein oder mehrere Bilder mit ortsaufgelösten Informationen (4) aufzunehmen und
ortsaufgelöste Informationen (4) zumindest eines Bilds des Kamerasystems (24) unter Verwendung einer Frequenztransformation (6) abschnittsweise zu transformieren, sodass für jeden Abschnitt des zumindest einen Bilds eine Folge (8) von Transformationskoeffizienten ermittelt wird.

**15.** Verwendung des Verfahrens nach einem der Ansprüche 1 bis 11 und/oder der Auswerteeinheit (26) nach Anspruch 12 oder 13 und/oder des Systems (22) nach Anspruch 14 zum Ermitteln eines Verschmutzungs- und/oder Abnutzungsgrads einer transparenten Schutzscheibe der Optikeinheit (25) des Kamerasystems (24), wobei das Kamerasystem (24) insbesondere außen an einem Fahrzeug angebracht ist.

**Claims**

**1.** Method for determining a transmission quality (20) of an optical unit (25) of a camera system (24), in which

- spatially resolved information (4) of at least one image of the camera system (24) is transformed section by section using a frequency transformation (6), so that a sequence (8) of transformation coefficients is determined for each section of the at least one image, wherein a respective transformation coefficient is in each case a measure of an energy value (E) in a specific frequency range,
- at least one sequence (8) of transformation coefficients which has the highest energy values (E) for the highest frequencies (f) is selected (10),
- a distribution (14) of the frequencies (f) is determined (12) using the at least one selected sequence (8) and
- the distribution (14) of the frequencies (f) is compared with a reference (16), wherein the transmission quality (20) of the optical unit (25) is determined using the comparison (18) in order to draw conclusions with respect to a contamination and/or wear of the optical unit.

**2.** Method according to claim 1,
**characterised in that**
the spatially resolved information (4) of the at least one image is spatially resolved brightness information.

**3.** Method according to claim 1 or 2,
**characterised in that**
the transformation coefficients are present in a respective sequence (8) in each case sorted in ascending order according to the frequency range.

**4.** Method according to one of the preceding claims,
**characterised in that**
the at least one longest sequence (8) of transformation coefficients is selected when the at least one sequence (8) of transformation coefficients is selected (10).

**5.** Method according to one of the preceding claims,

**characterised in that**
if the portion of specific high frequencies (f) lies below a predetermined minimal value in the distribution (14) of the frequencies (f), the transmission quality (20) of the optical unit (25) is determined as inadequate.

6. Method according to one of the preceding claims,
**characterised in that**
if the distribution (14) of the frequencies (f) in relation to the reference (16) is moved at least by a specific degree to lower frequencies (f), the transmission quality (20) of the optical unit (25) is determined as inadequate.

7. Method according to one of the preceding claims,
**characterised in that**
the reference (16) is a reference distribution (40), which was determined using a reference image of the same camera system (24), or that the reference (16) was determined on the basis of such a reference distribution (40).

8. Method according to one of the preceding claims,
**characterised in that**
for several images recorded within a predetermined time interval, the step of transforming (6) spatially resolved information (4) of at least one image of the camera system (24) and the step of selecting (10) the at least one sequence (8) of transformation coefficients is repeated several times, an averaged frequency distribution is determined using the selected sequences (8) of the transformation coefficients and the averaged frequency distribution is compared with the reference (16), wherein the transmission quality (20) of the optical unit (25) is determined using the comparison (18).

9. Method according to one of the preceding claims,
**characterised in that**
if the camera system (24) records a number of images, a scene imaged by the camera system (24) remains at least substantially unchanged with the recording of the number of images.

10. Method according to one of the preceding claims,
**characterised in that**

the sequences (8) of transformation coefficients for the sections of the at least one image are transmitted within a signal, in particular within a compressed video stream, from the camera system (24) to a receiving unit (28) and the at least one sequence (8) of transformation coefficients to be selected is selected and filtered from the signal, in particular from the compressed video stream,
wherein the distribution (14) of the frequencies (f) is determined using the at least one selected and filtered sequence (8) of transformation coefficients.

11. Method according to one of the preceding claims,
**characterised in that**
a need to service the optical unit (25) for the purpose of cleaning, polishing and/or replacement of at least one optical component of the optical unit (25) is determined on the basis of the determined transmission quality (20).

12. Evaluation unit (26) for determining a transmission quality (20) of an optical unit (25) of a camera system (24), which is designed

- to efficiently select (10) at least one sequence (8) of transformation coefficients, having the highest energy values (E) for the highest frequencies (f), from several sequences (8) of transformation coefficients, which were produced on the basis of spatially resolved information (4) of at least one image of the camera system (24) using a frequency transformation (6) so that a sequence (8) of transformation coefficients is determined for each section of the at least one image, wherein a respective transformation coefficient is in each case a measure of an energy value (E) in a specific frequency range,
- to determine (12) a distribution (14) of the frequencies (f) using the at least one selected sequence (8) and
- to compare (18) the distribution (14) of the frequencies (f) with a reference (16) and to determine the transmission quality (20) of the optical unit (25) using the comparison (18) in order to draw conclusions with respect to a contamination and/or wear of the optical unit.

13. Evaluation unit (26) according to claim 12,

**characterised by**
a filter element (32), which is designed to select and filter the at least one sequence (8) of transformation coefficients to be selected from a compressed video stream, which is transmitted from the camera system (24) to a receiving unit (28) .

14. System (22) with a camera system (24) and the evaluation unit (26) according to one of claims 12 or 13,

wherein the camera system (24) is designed to record one or more images with spatially resolved information (4), and
to transform spatially resolved information (4) of at least one image of the camera system (24) section by section using a frequency transformation (6) so that a sequence (8) of transformation coefficients is determined for each section of the at least one image.

15. Use of the method according to one of claims 1 to 11 and/or the evaluation unit (26) according to claim 12 or 13 and/or the system (22) according to claim 14, for determining a degree of contamination and/or degree of wear of a transparent protective screen of the optical unit (25) of the camera system (24), wherein the camera system (24) is attached in particular to the outside of the vehicle.

**Revendications**

1. Procédé de détermination de la qualité (20) de transmission d'une unité (25) optique d'un système (24) d'appareil photographique,
dans lequel

- on transforme partie par partie, en utilisant une transformation (6) de fréquence, des informations (4) à résolution spatiale d'au moins une image du système (24) d'appareil photographique, de manière à déterminer pour chaque partie de la au moins une image, une suite (8) de coefficients de transformation, dans lequel un coefficient de transformation respectif est respectivement une mesure d'une énergie (E) dans un domaine de fréquence déterminé,
- on choisit (10) au moins une suite (8) de coefficients de transformation, qui a les énergies (E) les plus grandes pour les fréquences (f) les plus hautes,
- en utilisant la au moins une suite (8) choisie, on détermine (12) une répartition (14) des fréquences (f), et
- on compare (18) la répartition (14) des fréquences (f) à une référence (16), dans lequel, en utilisant la comparaison (18), on détermine la qualité (20) de transmission de l'unité (25) optique pour tirer des conclusions sur une salissure et/ou une usure de l'unité optique.

2. Procédé suivant la revendication 1,
**caractérisé en ce que**
les informations (4) à résolution spatiale de la au moins une image sont des informations de luminosité à résolution spatiale.

3. Procédé suivant la revendication 1 ou 2,
**caractérisé en ce que**
les coefficients de transformation sont triés de manière croissante respectivement suivant le domaine de fréquence en une suite (8) respective.

4. Procédé suivant l'une des revendications précédentes,
**caractérisé en ce que**,
lors du choix (10) de la au moins une suite (8) de coefficients de transformation, on choisit au moins la suite (8) la plus longue de coefficients de transformation.

5. Procédé suivant l'une des revendications précédentes,
**caractérisé en ce que**,

si dans la répartition (14) de fréquences (f), la proportion de hautes fréquences (f) déterminée est en-dessous d'une valeur minimum donnée à l'avance,
on détermine comme insuffisante la qualité (20) de transmission de l'unité (25) optique.

**6.** Procédé suivant l'une des revendications précédentes,
**caractérisé en ce que**,

si la répartition (14) des fréquences (f) est, par rapport à la référence (16), décalée au moins d'une certaine mesure vers les fréquences (f) plus basses,
on détermine comme insuffisante la qualité (20) de transmission de l'unité (25) optique.

**7.** Procédé suivant l'une des revendications précédentes,
**caractérisé en ce que**

la référence (16) est une répartition (40) de références, qui a été déterminée en utilisant une image de référence du même système (24) d'appareil photographique, ou **en ce que**
la référence (16) a été déterminée à l'aide d'une telle répartition (40) de référence.

**8.** Procédé suivant l'une des revendications précédentes,
**caractérisé en ce que**,

pour plusieurs images enregistrées dans un intervalle de temps donné à l'avance,
on répète plusieurs fois le stade de la transformation (6) d'informations (4) à résolution spatiale d'au moins une image du système (24) d'appareil photographique et le stade du choix (10) de la au moins une suite (8) de coefficients de transformation, on détermine, en utilisant les suites (8) choisies des coefficients de transformation, une répartition de fréquences en moyenne, et on compare (18) la répartition de fréquences en moyenne à la référence (16), dans lequel on détermine la qualité (20) de transmission de l'unité (25) optique en utilisant la comparaison (18) .

**9.** Procédé suivant l'une des revendications précédentes,
**caractérisé en ce que**,
si le système (24) d'appareil photographique enregistre plusieurs images, une scène reproduite par le système (24) d'appareil photographique, lors de l'enregistrement des plusieurs images, reste au moins sensiblement inchangée.

**10.** Procédé suivant l'une des revendications précédentes,
**caractérisé en ce que**

l'on transmet, du système (24) d'appareil photographique à une unité (28) de réception, les suites (8) de coefficients de transformation pour les parties de la au moins une image au sein d'un signal, en particulier au sein d'un flux vidéo compressé, et on choisit et on sépare par filtration la au moins une suite (8) à choisir de coefficients de transformation dans le signal, en particulier dans le flux vidéo compressé,
dans lequel on détermine la répartition (14) des fréquences (f) en utilisant la au moins une suite (8) choisie et séparée par filtration de coefficients de transformation.

**11.** Procédé suivant l'une des revendications précédentes,
**caractérisé en ce que**,
à l'aide de la qualité (20) de transmission, qui a été déterminée, on détermine une nécessité d'un entretien de l'unité (25) optique, en vue d'un nettoyage, d'un polissage et/ou d'un remplacement d'au moins un composant optique de l'unité (25) optique.

**12.** Unité (26) d'analyse pour la détermination d'une qualité (20) de transmission d'une unité (25) optique d'un système (24) d'appareil photographique, qui est conçue pour

- déterminer, à partir de plusieurs suites (8) de coefficients de transformation, qui ont été produites à l'aide d'informations (4) à résolution spatiale d'au moins une image du système (24) d'appareil photographique en utilisant une transformation (6) de fréquence, de manière à déterminer, pour chaque partie de la au moins une image, une suite (8) de coefficients de transformation, dans laquelle un coefficient respectif de transformation est respectivement une mesure d'une énergie (E) dans un domaine de fréquence déterminé pour choisir (10) au moins une suite (8) de coefficients de transformation, qui a, pour les fréquences (f) les plus hautes, les énergies (E) les plus grandes,
- en utilisant la au moins une suite (8) choisie, on détermine (12) une répartition (14) des fréquences (f), et
- pour comparer (18) la répartition (14) des fréquences (f) à une référence (16) et en utilisant la comparaison (18) pour déterminer la qualité (20) de transmission de l'unité (25) optique, afin de tirer des conclusions sur une salissure et/ou une usure de l'unité optique.

13. Unité (26) d'analyse suivant la revendication 12,
**caractérisée par**
un élément (32) de filtre, qui est agencé pour choisir et séparer par filtration la au moins une suite (8) à choisir de coefficients de transformation dans un flux vidéo compressé, qui est transmis par le système (24) d'appareil photographique à unité (28) de réception.

14. Système (22) comprenant un système (24) d'appareil photographique et l'unité (26) d'analyse suivant l'une des revendications 12 ou 13,

dans lequel le système (24) d'appareil photographique est agencé pour enregistrer une ou plusieurs images avec des informations (4) à résolution spatiale, et
transformer partie par partie des informations (4) à résolution spatiale d'au moins une image du système (24) d'appareil photographique en utilisant une information (6) de fréquence, de manière à déterminer, pour chaque partie de la au moins une image, une suite (8) de coefficients de transformation.

15. Utilisation du procédé suivant l'une des revendications 1 à 11 et/ou de l'unité (26) d'analyse suivant la revendication 12 ou 13 et/ou du système (22) suivant la revendication 14, pour la détermination d'un degré de salissure et/ou d'usure d'une lame transparente de protection de l'unité (25) optique du système (24) d'appareil optique, le système (24) d'appareil optique étant monté notamment à l'extérieur sur un véhicule.

FIG 1

4 — [ ]
     ↓ 6
8 — [ ]
     ↓ 10, 12
     18
14 — [ ] ←→ [ ] — 16
     ↓
     [ ] — 20

2

FIG 2

24    25    30    32    30    28

26

34

22

FIG 3

FIG 4

**EP 3 867 870 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20090278950 A1

### In der Beschreibung aufgeführte Nicht-Patentliteratur

- **AUTOREN HONG-DAR LIN ; YUAN-SHYI PETER CHIU ; SHIH-VIN HSU.** A visual inspection system for quality control of optical lenses. *International Journal of the Physical Sciences Val.,* 04. Juni 2011, vol. 6 (11), 2701-2709